# EUROPEAN PATENT SPECIFICATION

(11) **EP 1 867 241 B1**
(45) Date of publication and mention of the grant of the patent: **07.08.2013**
(21) Application number: 06729851.3
(22) Date of filing: 17.03.2006
(51) Int. Cl.: A23L 1/227

(54) **SEASONING HAVING FUNCTION OF IMPARTING BODY**
MEHR GESCHMACKSFÜLLE VERLEIHENDES WÜRZMITTEL
ASSAISONNEMENT DONNANT DU CORPS

(30) Priority: 25.03.2005 JP 2005087485
(43) Date of publication of application: 19.12.2007
(73) Proprietor: Ajinomoto Co., Inc., Tokyo 104-8315 (JP)
(72) Inventor: HAYASHI, Kazuhiro, -ku, Kawasaki-shi, Kanagawa, 2108681 (JP); KOJIMA, Mari, -ku, Kawasaki-shi, Kanagawa, 2108681 (JP); YAMANAKA, Tomohiko, -ku, Kawasaki-shi, Kanagawa, 2108681 (JP); KAWAGUCHI, Hirokazu, -ku, Kawasaki-shi, Kanagawa, 2108681 (JP); TAMURA, Hiroshi, -ku, Kawasaki-shi, Kanagawa, 2108681 (JP); MIYAMURA, Naohiro, -ku, Kawasaki-shi, Kanagawa, 2108681 (JP)
(74) Representative: Strehl Schübel-Hopf & Partner
(86) International application number: PCT/JP2006/305903
(87) International publication number: WO 2006/104022

(56) References cited:
- WO-A1-2004/096836
- JP-A- 04 121 161
- JP-A- 08 228 715
- DATABASE WPI Week 199230, Derwent Publications Ltd., London, GB; AN 1992-244210 & JP 4 121 161 A (NISSHIN FLOUR MILLING CO) 22 April 1992

## Description

### Technical Field

The present invention relates to a glycopeptide having an effect of imparting a kokumi taste, and more particularly relates to a seasoning characterized by comprising this glycopeptide as an active ingredient, and a food or drink characterized by being seasoned with such a seasoning.

The seasoning of the present invention is excellent in a kokumi taste, in particular a kokumi taste of a first taste and a middle taste, and hence a kokumi taste of a first taste and a middle taste of a food or drink seasoned with this seasoning is enhanced. In other words, it can be said that the present invention is directed to a method of improving a kokumi taste of a food or drink. Here, the kokumi taste of a first taste refers to a kokumi taste felt within 2 seconds from the time when a food is put in the mouth, and the kokumi taste of a middle taste refers to a kokumi taste felt between 2 to 4 seconds therefrom, and the kokumi taste of an aftertaste refers to a kokumi taste felt after 4 seconds therefrom.

### Background Art

The kokumi taste refers to a taste which cannot be expressed by the five basic tastes (a sweet taste, a salt taste, a sour taste, a bitter taste, and an umami taste), and includes not only basic tastes of thickness, spread, continuity, unity and the like, but also includes a taste obtained by enhancing tastes around or peripheral to the basic tastes. Heretofore, some methods for imparting a kokumi taste have been reported, and a method in which glutathione is added (Japanese Patent No. 1464928), a method in which a glycopeptide is added (WO 2004/096836) and the like are known.

However, in these conventional methods of imparting a kokumi taste, a kokumi taste centering an aftertaste can be imparted, but an effect of imparting a kokumi taste of a first taste and a middle taste could not be obtained to a desired extent. On the other hand, as a seasoning that imparts a kokumi taste of a first taste and a middle taste, a protein hydrolysate and the like can be exemplified. However, there were problems that a different taste or an undesired flavor is imparted due to impurities and the like.

### Disclosure of the Invention

### [Problems that the Invention is to Solve]

Under the background of the prior art described in the previous section, an object of the present invention is to provide a seasoning which can be more widely used in foods and drinks and has a strong effect of improving the tastes of the foods and drinks, thereby being capable of imparting a kokumi taste, in particular, a kokumi taste of a first taste and a middle taste.

### [Means for Solving the Problems]

The present inventor made intensive studies in order to achieve the object described in the previous section, and as a result, the inventor found a glycopeptide which has an excellent effect of imparting a kokumi taste of a first taste and a middle taste to a food or drink. Hereinafter, the finding will be described in detail.

In order to confirm the main body having an effect of imparting a kokumi taste of a first taste and a middle taste, the present inventor performed tracking and confirmation using seasonings having an extremely strong effect of imparting a kokumi taste of a first taste and a middle taste when added to a food or drink together with the judgment based on sensory evaluation.

First, with regard to selecting a starting raw material, the present inventor advanced confirmation using as a starting raw material, a seasoning having an extremely strong effect of imparting a kokumi taste of a first taste and a middle taste when added to a food or drink even in a small amount. More specifically, a seasoning obtained by hydrolyzing a raw material containing wheat protein by a koji mold was selected as a starting raw material.

As a result of intensive studies, the present inventor found that a fraction related to imparting of a kokumi taste of a first taste and a middle taste of the above-mentioned seasoning is a fraction having a molecular weight of from 1, 000 to 30,000. That is, the present inventor confirmed that the fraction having a molecular weight of from 1,000 to 30, 000 of the above-mentioned seasoning has a function of imparting of a kokumi taste of a first taste and a middle taste by various analyses and undergoing sensory evaluation. Further, the inventor revealed that it is necessary for imparting a kokumi taste of a first taste and a middle taste that a glycopeptide which has a molecular weight of from 1,000 to 30,000 and also is composed of a sugar chain and a peptide linked to each other is contained, and thus the present invention has been completed based on these findings.

The present invention provides the following.
[1] A seasoning having a function of imparting a kokumi taste, characterized by comprising as an active ingredient, a glycopeptide which is composed of a sugar chain and a peptide linked to each other,
   wherein the glycopeptide has a structure represented by the following sequence formula <I> and has a molecular weight of from 3,000 to 30,000: wherein Man represents a mannose residue, Xyl represents a xylose residue, GlcNAc represents an N-acetylglucosamine residue, Fuc represents a fucose residue, and X represents a peptide residue.
[2] The seasoning having a function of imparting a kokumi taste according to [1] above, characterized in that the glycopeptide is in the form of a hydrolysate of a vegetable protein by a koji mold.
[3] The seasoning having a function of imparting a kokumi taste according to [1] or [2] above, characterized in that the glycopeptide is in the form of a hydrolysate of wheat gluten or defatted soybean by an enzyme.
[4] A food or drink, characterized by being seasoned with the seasoning according to any one of [1] to [3] above.

### Best Mode for Carrying Out the Invention

Hereinafter, the present invention will be described in detail.

First, the glycopeptide as used herein has a structure represented by the sequence formula <I>. Further, the peptide is not limited with respect to the type of constituent amino acid as long as it is composed of two or more amino acids linked to each other. However, in the case where it is composed of 5 or more amino acid residues, the effect of improving a taste is particularly increased.

In the formula, Man represents a mannose residue, Xyl represents a xylose residue, GlcNAc represents an N-acetylglucosamine residue, Fuc represents a fucose residue, and X represents a peptide residue.

It is also possible to synthesize the glycopeptide of the present invention, however, in general, a glycopeptide obtained by hydrolyzing a raw material containing a vegetable protein such as wheat protein or soybean protein by a koji mold or an enzyme (protease or the like) and subjecting the resulting hydrolysate to separation and purification can be used.

It is essential that the glycopeptide should have a molecular weight of from 3,000 to 30,000 for exhibiting the effect of imparting a kokumi taste of a first taste and a middle taste of the present invention. The fraction having a molecular weight of from 3,000 to 30,000 containing the glycopeptide is not particularly limited with respect to the content for exhibiting an effect of imparting a kokumi taste in the raw material of the seasoning or the seasoning, and it may be a part in the seasoning or one obtained by purifying the fraction. However, when the content in the seasoning is preferably 1 ppm or more, more preferably 5 ppm or more, the effect of imparting a kokumi taste of the seasoning to a food or drink becomes evident.

The raw material containing such a protein is not particularly limited as long as a hydrolysate thereof contains the above-mentioned glycopeptide, and may be a starting raw material containing an arbitrary protein. Any protein, for example, a vegetable protein, an animal protein, a yeast cell-derived protein or the like can be used. Examples of the vegetable protein include seed proteins such as wheat protein, soybean protein and corn protein, and the like. Among them, in particular, an excellent effect of improving a kokumi taste is observed in a glycopeptide obtained from wheat protein or soybean protein.

As the enzyme to be used in the hydrolysis of protein according to the present invention, a naturally occurring enzyme which is metabolized with the use of a microorganism or the like, or a commercially available enzyme preparation can be used as long as it can enzymatically degrade a protein to be a raw material or a starting raw material containing such a protein. With regard to these enzymes, one type or plural types of enzymes may be appropriately used. The pH can be adjusted by adding an acid or an alkali which is allowed to be used in foods and drinks. The treatment time when a protein or a starting raw material containing a protein is treated by enzymatic hydrolysis varies depending on the conditions related to the hydrolysis such as the type of enzyme to be used for the hydrolysis of the protein, the amount of the enzyme to be used, the temperature, the pH, and the like. When the treatment time is much longer than necessary, unnecessary degradation or browning occurs or the like, and it may have an adverse effect on the quality in some cases, therefore, it is preferably 10 to 100 hours. A person skilled in the art can easily determine the hydrolysis conditions suitable for providing a glycoprotein having a predetermined molecular weight according to the present invention by appropriately sampling the hydrolysate during the hydrolysis treatment and then carrying out analysis or the like.

The seasoning containing a glycopeptide of the present invention can be obtained by collecting a liquid part of a hydrolysate of a protein hydrolyzed to a moderate degree by an enzyme with the use of a common method such as filtration or centrifugation. Such a seasoning can also be used as a purified seasoning by being subjected to a treatment such as decoloration, purification or concentration, for example, a decoloration treatment with the use of activated carbon, an ultrafilter or the like, a separation and purification treatment with various chromatographic techniques or membrane separation using a permeable membrane or the like, or a concentration treatment such as membrane concentration, vacuum concentration or the like. Further, the seasoning containing a glycopeptide of the present invention can be made in the form of a powder seasoning excellent in storage stability without adding table salt or the like if it is dried and powderized by a method such as spray-drying or vacuum freeze-drying.

Further, in the case where a high purity fraction having a molecular weight of from 3,000 to 30,000 containing a glycopeptide of the present invention is desired to be obtained, isolation and purification can be carried out by using a known separation and purification treatment method such as ultrafiltration, reverse osmosis membrane, dialysis membrane, normal phase HPLC, reversed phase HPLC, ion exchange chromatography, gel filtration chromatography or affinity chromatography from the above-mentioned protein hydrolysate or the above-mentioned glycopeptide-containing seasoning of the present invention.

The glycopeptide-containing seasoning of the present invention has an effect of imparting a kokumi taste, in particular, a kokumi taste of a first taste and a middle taste to a food or drink and improving the taste of the whole food or drink without particularly adding an umami seasoning or the like by adding it to the food or drink.

There are a variety of foods such as soups, a variety of processed foods and the like with respect to the food in which an effect of improving a taste such as an effect of imparting a kokumi taste can be obtained by the glycopeptide-containing seasoning of the present invention. However, a more remarkable effect can be obtained particularly in a fermented seasoning, a fermented food, a food or drink using the same and the like, and a kokumi taste, in particular, a kokumi taste of a first taste and a middle taste can be imparted to these foods.

When the glycopeptide-containing seasoning of the present invention is added to a food, there is no restriction on a physical property such as a dry powder, a paste or a solution. Further, with regard to the addition thereof to a food or a seasoning, whenever it is added to a raw material, for example, before production, during production, after completion, immediately before eating, during eating, etc., an effect of imparting a kokumi taste can be obtained.

### Examples

Hereinafter, the present invention will be described with reference to Examples.

### <Example 1: Fractionation of seasoning containing glycopeptide-containing fraction and confirmation of effect of imparting kokumi taste>

30 g of soybean protein "ESUSAN PROTEN F" (manufactured by J-Oil Mills Inc.) was added to 2 L of tap water and dispersed therein, and the resulting mixture was sterilized by heating at 120°C for 20 minutes, whereby a dispersion liquid of defatted soybean was prepared. A culture broth of Aspergillus oryzae pre-cultured in a culture medium in advance was added thereto to give a final concentration of 1% (v/v), and cultivation was carried out in a fermentor jar at 30°C for 36 hours. 500 g of wheat gluten "SWP-5A" (manufactured by Amylum) was added to 2 L of tap water and sufficiently dispersed therein, and the resulting mixture was sterilized by heating at 120°C for 20 minutes, whereby a dispersion liquid of wheat gluten was prepared. To 2 L of the prepared dispersion liquid of wheat gluten, 0.6 L of the above defatted soybean culture broth of Aspergillus oryzae was added as an enzyme source, and the resulting mixture was subjected to hydrolysis reaction in a fermentor jar by maintaining the fermentor jar at 36°C for 50 hours, while being agitated with aeration. The thus-obtained hydrolysate liquid was subjected to solid-liquid separation using a Nutsche funnel, and then 60 g of activated carbon was added to the filtrate. The resulting mixture was heated at 60°C for 10 minutes to decolorize the filtrate. The activated carbon was removed from the obtained decolorized liquid with a Nutsche funnel, and the filtrate was dried with a lyophilizer, whereby a powdery enzymatically degraded wheat gluten seasoning was obtained.

The thus-obtained powdery enzymatically degraded wheat gluten seasoning was dissolved in water, and the resulting aqueous solution was ultrafiltered using an ultrafilter membrane "YM30" (manufactured by MILLIPORE Corporation). Then, the collected liquid was further ultrafiltered using an ultrafilter membrane "YM1" (manufactured by MILLIPORE Corporation), whereby a fraction having a molecular weight of from 1,000 to 30,000 was obtained. Further, the obtained fraction was further ultrafiltered using an ultrafilter membrane "YM3" (manufactured by MILLIPORE Corporation), whereby a fraction having a molecular weight of from 3,000 to 30,000 was fractionated.

The thus-obtained fractions were subjected to an analysis by an HPLC method (using a fluorescence detector) based on a precolumn derivatization method. In order to separate the sugar chain from the peptide, an enzymatic treatment was carried out with an enzyme, glycopeptidase A (manufactured by Seikagaku Kogyo Co., Ltd.) for 16 hours thereby cleaving the linkage between the sugar chain and the peptide. Then, the released sugar chain was fluorescently derivatized with 2-aminopyridine and subjected to an HPLC analysis using a fluorescence detector, and it was confirmed that the sugar chain is contained in the above fractions (a reference literature for conditions of derivatization and analysis: Agric. Biol. Chem., 54(8), 2169-2170, 1990).

In order to confirm a function of imparting a kokumi taste of the glycopeptide-containing fractions, each of the obtained two fractions was added to a commercially available beef extract (manufactured by Bordon) such that the concentration thereof upon eating becomes 0.1 ppm to 100 ppm. By using a beef extract without addition thereof as a control, sensory evaluation was carried out by 15 taste panelists. The results are shown in the following Table 1.

Incidentally, the meanings of the symbols in Table 1 are as follows: ×: not higher than the control; Δ: the same as the control; ○: a kokumi taste of a first taste and a middle taste is stronger than the control; and ○○: a kokumi taste of a first taste and a middle taste is apparently stronger than the control.

**Table 1**

| Molecular weight: 1,000 to 30,000 * | | | Molecular weight: 3,000 to 30,000 | |
|---|---|---|---|---|
| | Glycopeptide-containing fraction | | | Glycopeptide-containing fraction |
| 0.1 ppm | × | | 0.1 ppm | Δ |
| 0.5 ppm | Δ | | 0.5 ppm | ○ |
| 1 ppm | ○ | | 1 ppm | ○○ |
| 5 ppm | ○○ | | 5 ppm | ○○ |
| 10 ppm | ○○ | | 10 ppm | ○○ |
| 50 ppm | ○○ | | 50 ppm | ○○ |
| 100 ppm | ○○ | | 100 ppm | ○○ |

| | | | | |
|---|---|---|---|---|
| * not belonging to the scope of the present invention | | | | |

As is understood from the above table, it is found that an effect of imparting a kokumi taste is evident at 1 ppm or more, and the effect is more preferred in the fraction having a molecular weight of from 3,000 to 30,000 than the fraction having a molecular weight of from 1,000 to 30,000.

### <Example 2: Comparison of functions between the glycopeptide-containing fraction of the present invention and a known glycopeptide> (Reference only)

In order to confirm the difference in the effect of imparting a kokumi taste between the glycopeptide- containing fraction having a molecular weight of from 1,000 to 30,000 obtained in Example 1 and a glycopeptide having a structure represented by the following sequence formula (II) disclosed in WO 2004/096836, each of the substances was added to a commercially available beef extract (manufactured by Bordon) such that the concentration thereof becomes 1 ppm. By using a beef extract without addition thereof as a control, sensory evaluation was carried out by 16 taste panelists. With regard to the evaluation points, evaluation was carried out in terms of feeling a kokumi taste in a first taste, a middle taste or an aftertaste. A kokumi taste felt in 2 seconds, 4 seconds and 6 seconds after a tasting solution was put in the mouth was determined to be a kokumi taste of a first taste, a kokumi taste of a middle taste, and a kokumi taste of an aftertaste, respectively. The results are shown in the following Table 2.

**Table 2**

| | Kokumi taste of first taste | | Kokumi taste of middle taste | | Kokumi taste of aftertaste | |
|---|---|---|---|---|---|---|
| | Glycopeptide | Present invention | Glycopeptide | Present invention | Glycopeptide | Present invention |
| Kokumi taste is stronger | 0 | 16*** | 6 | 10 | 15*** | 1 |

| | | | | | | |
|---|---|---|---|---|---|---|
| (***: Significance level of 0.1%, **: Significance level of 1%, *: Significance level of 5%) | | | | | | |

From the above table, it is found that the present invention has an effect of imparting a kokumi taste of a first taste and a middle taste, which is different fromWO 2004/096836 having an effect of imparting a kokumi taste of an aftertaste.

### <Example 3: Comparison of functions between presence and absence of glycopeptide-containing fraction (the present invention)>

Two types of commercially available hydrolyzed vegetable protein seasonings (A and B) were fractionated by the same fractionation method as in Example 1 (it was confirmed that a sugar chain is not contained in the commercially available seasonings), and then, each of them was added to a beef extract to give a final concentration of 1 ppm or 5 ppm in the same manner as in Example 1. Then, sensory evaluation was carried out by 20 taste panelists by the pair test in terms of an effect of imparting a kokumi taste in a first taste and a middle taste in the same manner as in Example 2. The results are shown in the following Table 3.

**Table 3**

| Addition at 1 ppm | | | | |
|---|---|---|---|---|
| | Commercially available seasoning A | Present invention | Commercially available seasoning B | Present invention |
| Kokumi taste is stronger | 3 | 17** | 2 | 18*** |
| | | | | |
| | | | | |

| Addition at 5 ppm | | | | |
|---|---|---|---|---|
| | Commercially available seasoning A | Present invention | Commercially available seasoning B | Present invention |
| Kokumi taste is stronger | 1 | 19** | 1 | 19*** |

| | | | | |
|---|---|---|---|---|
| (***: Significance level of 0.1%, **: Significance level of 1%, *: Significance level of 5%) | | | | |

From the above table, it is found that the presence of the sugar chain-containing fraction is important for the expression of a kokumi taste of a first taste and a middle taste.

### <Example 4: Effect of imparting kokumi taste to consomme soup> (Reference only)

In order to verify an effect of improving a taste of a consomme soup (a 2% solution) in the same manner as the sensory evaluation in Example 1, a glycopeptide- containing fraction having a molecular weight of from 1, 000 to 30,000 obtained by the method of Example 1 was added to a commercially available consomme soup (manufactured by Ajinomoto Co., Inc.) to give a final concentration of 10 ppm or 50 ppm. By using a consomme soup without addition thereof as a control, sensory evaluation was carried out by 16 taste panelists by the pair test. The results are shown in the following Table 4.

**Table 4**

| Addition at 10 ppm | | |
|---|---|---|
| | Without addition | Addition of glycopeptide-containing fraction |
| Kokumi taste is stronger | 2 | 14** |
| Comment | Comment | A kokumi taste of a first taste and a middle taste is imparted thereby to provide a rich taste. |
| | | |
| | | |

| Addition at 50 ppm | | |
|---|---|---|
| | Without addition | Addition of glycopeptide-containing fraction |
| Kokumi taste is stronger | 1 | 15*** |
| Comment | | A kokumi taste of a first taste and a middle taste is imparted thereby to provide a rich taste. |

| | | |
|---|---|---|
| (***: Significance level of 0.1%, **: Significance level of 1%, *: Significance level of 5%) | | |

From the above table, it is found that the present invention also has a remarkable effect of imparting a kokumi taste of a first taste and a middle taste to a food.

### <Example 5: Effect of imparting kokumi taste to home-made dashi (soup stock) extract>

In order to verify an effect of improving a taste of a home-made dashi (soup stock) extract in the same manner as the sensory evaluation in Example 1, a glycopeptide- containing fraction having a molecular weight of from 3,000 to 30,000 obtained by the method of Example 1 was added to a home-made dashi (soup stock) extract prepared by the preparation method shown in the following Table 5 to give a final concentration of 1 ppm or 5 ppm. By using a home-made dashi (soup stock) extract without addition thereof as a control, sensory evaluation was carried out by 16 taste panelists by the pair test. The results are shown in the following Table 6.

**Table 5: Preparation method of home-made dashi (soup stock) extract**

| 5% Natural katsuo (bonito) dashi (Atsu Kezuri (thicker slices of dried bonito)) | 5% Natural katsuo (bonito) dashi (Hana Katsuo (dried bonito flakes)) |
|---|---|
| <Preparation method> | <Preparation method> |
| Add 5% by weight of Hon katsuo Atsu Kezuri W.I. (available from Igarashi Katsuobushi-ten) to boiling water | Add 5% by weight of Hana Katsuo Aka (available from Igarashi Katsuobushi-ten) to boiling water |
| ↓ | ↓ |
| Perform extraction of dashi for 45 minutes while boiling the mixture slightly | After adding the bonito flakes, turn the stove off, and let the mixture stand until the bonito flakes go down to the bottom. |
| ↓ | ↓ |
| Put a paper towel on a colander and pour the extraction liquid through the colander. | Put a paper towel on a colander and pour the extraction liquid through the colander. |
| ↓ | ↓ |
| Adjust the water content to make the yield 100%. | Adjust the water content to make the yield 100%. |

The above-mentioned dashi stocks are mixed such that the ratio of Atsu Kezuri dashi to Hana Katsuo dashi is 70% to 30%.

**Table 6**

| Addition at 1 ppm | | |
|---|---|---|
| | Without addition | Addition of glycopeptide-containing fraction |
| Kokumi taste is stronger | 3 | 13* |
| Comment | | A kokumi taste of a first taste and a middle taste is imparted. |
| | | |
| | | |

| Addition at 5 ppm | | |
|---|---|---|
| | Without addition | Addition of glycopeptide-containing fraction |
| Kokumi taste is stronger | 2 | 14** |
| Comment | | A kokumi taste of a first taste and a middle taste is imparted. |

| | | |
|---|---|---|
| (***: Significance level of 0.1%, **: Significance level of 1%, * : Significance level of 5%) | | |

From the above table, it is found that the present invention also has a remarkable effect of imparting a kokumi taste of a first taste and a middle taste to a food.

### <Example 6: Fractionation of seasoning containing glycopeptide-containing fraction (derived from soybean) and confirmation of effect of imparting kokumi taste>

60 kg of expanded defatted soybean and 47 kg of a culture broth of L. lactis AJI10212 (FERM BP-8552) (pH 6.3) were put in a mixer ("mazelar" (manufactured by Sangyo Kikai Co. Ltd.)), and mixed sufficiently. Then, the spores of A. sojae AJI17552 (FERM P-19637) were added thereto at 2 × 10⁶ spores/g of raw material and mixed. The resulting mixture was placed in a ventilation koji producing apparatus, and cultivation was carried out for 45 hours while maintaining the temperature of the mixture at 30 to 32°C. Then, 40 kg of the obtained koji and 108 kg of a salt solution with a salt concentration of 15.6% by weight were put in a tank with a jacket. As the salt, "Nakuru M" (manufactured by Naikai Salt Industries Co., Ltd.) was used. Moromi was heated by circulating hot water in the jacket portion, and fermentation was carried out at 35°C for 14 days. Further, the mixture was mixed once a day during fermentation, whereby koji floating in the upper area was uniformly dispersed. After completion of the fermentation, the residue was removed with a filter cloth, whereby Namaage was obtained. To 1 L of the resulting Namaage, 40 g of table salt and 20 g of 95% alcohol (manufactured by Japan Alcohol Corporation) were added, and then the pH of the Namaage was adjusted to 4.5 with 6 N hydrochloric acid. To 200 g of Namaage after the pH adjustment, 0.04 g of activated carbon "SD-V6 carbon" (manufactured by Aj inomoto Fine-Techno Co., Inc.) was added (at 0.02% relative to Namaage), and the mixture was incubated at 30°C for 120 minutes. Then, the pH of the mixture was adjusted to 5.1 with 40% NaOH, and filtration was carried out twice through a filter paper of "No. 2" and then, a filter paper of "No. 5C" (manufactured by Advantec) to remove activated carbon. Subsequently, the obtained clear Namaage was subjected to hiire (heating) at 80°C for 30 minutes, and then left at 60°C for 24 hours to promote coagulation of ori (sediment). Finally, centrifugation was carried out to obtain a supernatant, and the supernatant was subjected to a filter treatment (0.45 µm, Chromatodisk (manufactured by Kurabo Industries Ltd.), whereby a clear enzymatically degraded defatted soybean protein seasoning was obtained.

The thus obtained enzymatically degraded defatted soybean protein seasoning was ultrafiltered by the same method as in Example 1, and fractions having a molecular weight of from 1,000 to 30,000 and a molecular weight of from 3,000 to 30,000 were fractionated. It was confirmed that the obtained fractions contain a sugar chain by the HPLC method described in Example 1.

In order to confirm a function of imparting a kokumi taste of the glycopeptide-containing fraction derived from soybean protein, sensory evaluation was carried out by 15 taste panelists by an evaluation method using a beef extract in the same manner as in Example 1. The results are shown in Table 7.

Incidentally, the meanings of the symbols in Table 7 are as follows: ×: not higher than the control; Δ: the same as the control; ○: a kokumi taste of a first taste and a middle taste is stronger than the control; and ○○: a kokumi taste of a first taste and a middle taste is apparently stronger than the control.

**Table 7**

| Molecular weight:1,000 to 30,000 * | | | Molecular weight: 3,000 to 30,000 | |
|---|---|---|---|---|
| | Glycopeptide-containing fraction | | | Glycopeptide-containing fraction |
| 0.1 ppm | × | | 0.1 ppm | Δ |
| 0.5 ppm | Δ | | 0.5 ppm | ○ |
| 1 ppm | ○ | | 1 ppm | ○○ |
| 5 ppm | ○○ | | 5 ppm | ○○ |
| 10 ppm. | ○○ | | 10 ppm | ○○ |
| 50 ppm | ○○ | | 50 ppm | ○○ |
| 100 ppm | ○○ | | 100 ppm | ○○ |

| | | | | |
|---|---|---|---|---|
| * not belonging to the scope of the present invention | | | | |

As is understood from the above table, it is found that an effect of imparting a kokumi taste is evident at 1 ppm or more, and the effect is more preferred in the fraction having a molecular weight of from 3,000 to 30,000 than the fraction having a molecular weight of from 1,000 to 30,000.

### Industrial Applicability

According to the present invention, a seasoning which can be more widely used in foods and drinks and has a strong effect of improving the tastes of the foods and drinks, thereby being capable of imparting a kokumi taste, in particular, a kokumi taste of a first taste and a middle taste can be provided.

## Claims

1. A seasoning having a function of imparting a kokumi taste, **characterized by** comprising as an active ingredient, a glycopeptide which is composed of a sugar chain and a peptide linked to each other,
wherein the glycopeptide has a structure represented by the following sequence formula <I> and has a molecular weight of from 3,000 to 30,000: wherein Man represents a mannose residue, Xyl represents a xylose residue, GlcNAc represents an N-acetylglucosamine residue, Fuc represents a fucose residue, and X represents a peptide residue.

2. The seasoning having a function of imparting a kokumi taste according to claim 1, **characterized in that** the glycopeptide is in the form of a hydrolysate of a vegetable protein by a koji mold.

3. The seasoning having a function of imparting a kokumi taste according to claim 1 or 2, **characterized in that** the glycopeptide is in the form of a hydrolysate of wheat gluten or defatted soybean by an enzyme.

4. A food or drink, **characterized by** being seasoned with the seasoning according to any one of claims 1 to 3.

## Patentansprüche

1. Würzmittel mit einer Funktion zum Verleihen eines Kokumigeschmacks, **dadurch gekennzeichnet, dass** es als einen aktiven Bestandteil ein Glycopeptid enthält, das aus einer Zuckerkette und einem damit verbundenen Peptid zusammengesetzt ist, wobei das Glycopeptid eine Struktur der folgenden Sequenzformel <I> aufweist und ein Molekulargewicht von 3000 bis 30 000 hat: worin Man einen Mannoserest darstellt, Xyl einen Xyloserest darstellt, GlcNAc einen N-Acetylglucosamidrest darstellt, Fuc einen Fucoserest darstellt und X einen Peptidrest darstellt.

2. Würzmittel mit einer Funktion zum Verleihen eines Kokumigeschmacks nach Anspruch 1, **dadurch gekennzeichnet, dass** das Glycopeptid in der Form eines Hydrolysats eines Pflanzenproteins durch einen Koji-Pilz ist.

3. Würzmittel mit einer Funktion zum Verleihen eines Kokumigeschmacks nach Anspruch 1 oder 2, **dadurch gekennzeichnet, dass** das Glycopeptid in der Form eines durch ein Enzym erhaltenes Hydrolysats von Weizengluten oder entfetteten Sojabohnen ist.

4. Nahrungsmittel oder Getränk, das **dadurch gekennzeichnet ist, dass** es mit dem Würzmittel nach einem der Ansprüche 1 bis 3 gewürzt ist.

## Revendications

1. Assaisonnement ayant une fonction de conférer un goût de kokumi, **caractérisé en ce qu'**il comprend comme ingrédient actif un glycopeptide qui est composé d'une chaîne glucidique et d'un peptide liés entre eux,
où le glycopeptide a une structure représentée par la formule de séquence <1> suivante et a une masse moléculaire de 3 000 à 30 000 : où Man représente un résidu de mannose, Xyl représente un résidu de xylose, GlcNAc représente un résidu de N-acétylglucosamine, Fuc représente un résidu de fucose, et X représente un résidu de peptide.

2. Assaisonnement ayant une fonction de conférer un goût de kokumi selon la revendication 1, **caractérisé en ce que** le glycopeptide est sous forme d'un hydrolysat d'une protéine végétale par une moisissure koji.

3. Assaisonnement ayant une fonction de conférer un goût de kokumi selon la revendication 1 ou 2, **caractérisé en ce que** le glycopeptide est sous forme d'un hydrolysat de gluten de blé ou de soja dégraissé par une enzyme.

4. Aliment ou boisson **caractérisé en ce qu'**il est assaisonné avec l'assaisonnement selon l'une quelconque des revendications 1 à 3.
